# EUROPÄISCHE PATENTSCHRIFT

(11) **EP 2 290 423 B1**
(45) Veröffentlichungstag und Bekanntmachung des Hinweises auf die Patenterteilung: **17.10.2012**
(21) Anmeldenummer: 10008936.6
(22) Anmeldetag: 27.08.2010
(51) Int. Cl.: G02B 21/00

(54) **Scan-Mikroskop zum optische Abtasten von Proben mit einer Streuscheibe vor einem Durchlicht-Detektor**
Scanning-microscope for optical scanning of samples with a diffusion plate in front of a transmitted light detector
Microscope de balayage optique d'échantillons doté d'un verre diffuseur situé entre l'échantillon et un détecteur de lumière transmise

(30) Priorität: 28.08.2009 DE 202009011701 U
(43) Veröffentlichungstag der Anmeldung: 02.03.2011
(73) Patentinhaber: Leica Microsystems CMS GmbH, 35578 Wetzlar (DE)
(72) Erfinder: Kress, Claus, 69151 Neckargmünd (DE); Sendrowski, Peter, 69181 Leimen (DE)
(74) Vertreter: Schaumburg, Thoenes, Thurn, Landskron, Eckert

(56) Entgegenhaltungen:
- DE-A1- 19 944 148
- DE-A1-102007 048 089
- EILEEN K. SETO, SAVVAS DAMASKINOS,ARTHUR E. DIXON, WILLIAM L. DIEHL-JONES, CRAIG A. MANDATO: "Imaging electrophoretic gels with a scanning beam laser macroscope", ELECTROPHORESIS, Bd. 16, 15. April 2005 (2005-04-15), Seiten 934-940, XP002615639,
- CONSTANTINOU P ET AL: "A high-resolution MACROscope with differential phase contrast, transmitted light, confocal fluorescence, and hyperspectral capabilities for large-area tissue imaging", IEEE JOURNAL OF SELECTED TOPICS IN QUANTUM ELECTRONICS IEEE USA, Bd. 11, Nr. 4, Juli 2005 (2005-07), Seiten 766-777, XP002615640, ISSN: 1077-260X

## Beschreibung

Die Erfindung betrifft eine Vorrichtung zum optischen Abtasten von Proben mit einer Scan-Vorrichtung, die die Probe in einem Raster punktförmig oder zeilenförmig beleuchtet, einer Zoom-Optik, die zwischen der Scan-Vorrichtung und einem Objektiv angeordnet ist und die Größe des beleuchteten Abschnitts auf der Probe einstellbar festlegt.

Eine derartige Vorrichtung ist aus der DE 10 2007 048 089 A1 derselben Anmelderin bekannt, die eine Anordnung zum Untersuchen von mikroskopischen und makroskopischen Präparaten betrifft. Zwischen einem Objektiv und einer Scan-Vorrichtung ist eine Zoom-Optik angeordnet, die das Abtastlicht auf die Probe abbildet. Mit Hilfe der Zoom-Optik kann der Abbildungsmaßstab geändert und es kann ein relativ großer Arbeitsabstand erzielt werden. Die genannte Anordnung kann auch als konfokales Scan-Mikroskop ausgebildet sein. Eine Untersuchung der Probe im Durchlichtbetrieb ist nicht vorgesehen.

Für verschiedene Anwendungen ist es Vorteilhaft, eine lichtdurchlässige Probe im Durchlicht-Betrieb bei der punktförmigen oder zeilenförmigen Abtastung zu untersuchen. Hierzu wird bei bekannten Scan-Mikroskopen ein Durchlicht-Detektor in einem Durchlicht-Strahlengang angeordnet, der das von der Probe transmittierte Licht beim rasterförmigen Abtasten erfasst. Infolge der Verwendung einer Zoom-Optik mit variabler Vergrößerung in Verbindung mit der punktförmigen oder zeilenförmigen Abtastung gibt es nicht für jeden eingestellten Abbildungsmaßstab eine optimale Anpassung der Beleuchtung an den Durchlicht-Detektor, z.B. an die effektive fotoempfindliche Detektorfläche, insbesondere von Detektionslicht aus dem Randbereich des beleuchteten Abschnitts auf der Probe. Auch durch die Probe hindurchgehendes Scan-Licht, welches direkt auf die fotoempfindliche Fläche des Durchlicht-Detektors trifft, kann wegen lokaler Übersteuerung zu einem fehlerhaften Detektorsignal führen. Die genannten Effekte führen zu einem Qualitätsverlust und/oder Kontrastverlust eines mit dem Durchlicht-Detektor aufgenommenen Durchlicht-Bildes der Probe.

DE 199 44 148 A1 beschreibt ein Laserscanmikroskop mit einer Scaneinrichtung und einer Detektionseinrichtung zum Erfassen eines Bildes einer zu untersuchenden Probe. Über einen Referenzstrahlengang wird Referenzlicht der Detektionseinrichtung über eine Streuscheibe zugeführt. Referenzlicht und Licht von der Probe werden miteinander verglichen und quantitativ ausgewertet.

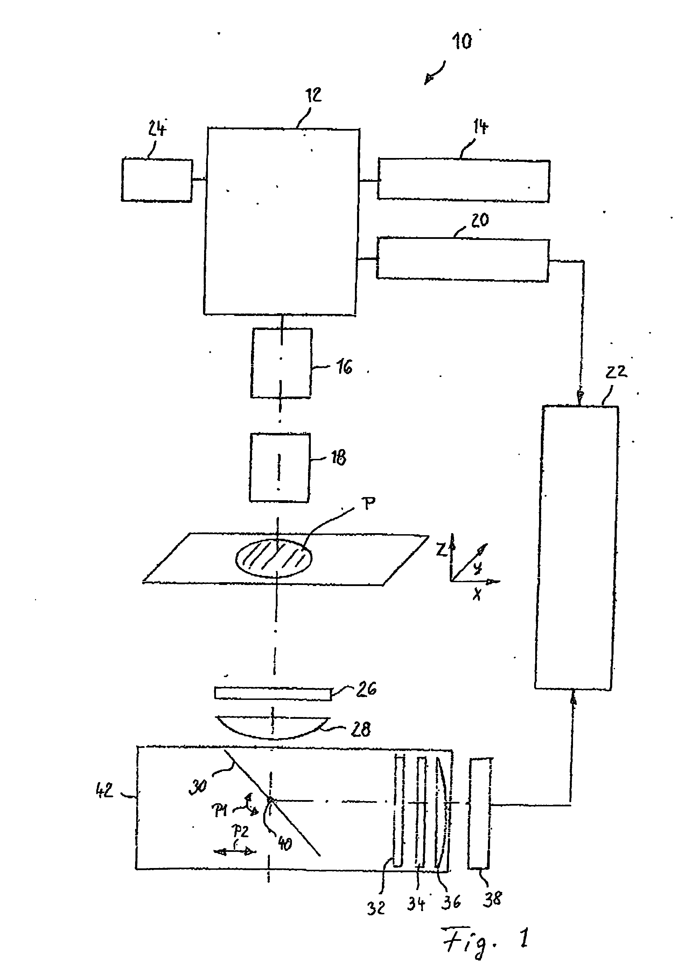

EILEEN K. SETO, SAVVAS DAMASKINOS, ARTHUR E. DIXON, WILLIAM L. DIEHL-JONES, CRAIG A. MANDATO: "Imaging electrophoretic gels with a scanning beam laser macroscope", ELECTROPHORESIS, Bd. 16, 15. April 2005 (2005-04-15), Seiten 934-940, XP002615639, Absatz [02.1]; Abbildung 1b, beschreibt ein Laser-Scanning-Makroskop zum Abtasten von elektrophoretischen Gels. Das im Durchlichtbetrieb arbeitende Makroskop umfasst einen Photomultiplier, dem Licht von der Probe und Fluoreszenzlicht zugeführt wird. Weiterhin kann die Anordnung auch im Auflichtbetrieb arbeiten.

Es ist Aufgabe der Erfindung, eine Vorrichtung zum optischen Abtasten von Proben anzugeben, für die eine hohe Bildqualität von Probenbildern auch bei variablem Abbildungsmaßstab erzielt wird.

Diese Aufgabe wird für die eingangs genannte Vorrichtung dadurch gelöst, dass ein Durchlicht-Detektor vorgesehen ist, dem von der Probe transmittiertes Licht zugeführt ist, und dass im Durchlicht-Strahlengang vor dem Durchlicht-Detektor eine Streuscheibe angeordnet ist, die das von der Probe transmittierte Licht streut, um eine lokale Überslerevung des Durchficht-Detektors zu Vermeiden

Die Vorrichtung nach der Erfindung ermöglicht eine rastende Abtastung der Probe im Durchlicht-Betrieb unter Beibehaltung der Vorteile, die sich die Untersuchung in einem weiten Größenbereich, z.B. von einem Übersichtsausschnitt der Probe bis zu Details an biologischen Zellen.

Gemäß der Erfindung trifft auf die fotoempfindliche Detektorfläche des Durchlicht-Detektors kein direkt von der Probe durchgelassenes Scan-Licht, sondern nur Streulicht, welches in einem größeren Raumwinkel gestreut ist und die gesamte fotoempfindliche Fläche des Durchlicht-Detektors oder zumindest einem großen Teil davon beleuchtet. Dadurch wird ein Wandern eines vom Scan-Licht hervorgerufenen Leuchtpunktes auf der Detektorfläche und damit eine lokale Übersteuerung vermieden und eine Homogenisierung der Beleuchtung erreicht. Die Streuscheibe hat somit eine Ausgleichsfunktion, da der Durchlicht-Detektor durch das diffuse Licht in etwa gleichförmig ausgeleuchtet wird und Inhomogenitäten bei der Umwandlung von Licht in ein elektrisches Signal durch lokale Übersättigung vermieden wird. Für unterschiedliche Vergrößerungen mittels der Zoom-Optik und der dadurch nicht vermeidbaren unterschiedlichen Ausleuchtung der fotoempfindlichen Fläche des Durchlicht-Detektors ergeben sich insbesondere im Randbereich des beleuchteten Abschnitts auf der Probe keine negativen Bildeffekte. Bei unterschiedlichen Vergrößerungen der Zoom-Optik und unabhängig vom gerade verwendeten Objektiv lassen sich im Durchlicht-Betrieb somit aus dem Signal des Durchlicht-Detektors Durchlicht-Bilder mit hoher Qualität und hohem Kontrast erzielen.

Die Verwendung einer Streuscheibe vor dem Durchlicht-Detektor erscheint eine ungewöhnliche Maßnahme zu sein, reduziert sie doch das Nutzsignal für den Durchlicht-Detektor. Diese Reduktion kann jedoch durch zusätzliche Strahlformungsmaßnahmen kompensiert werden. Der Vorteil liegt jedoch in der Bildverbesserung, der Homogenisierung, der Linearität des gewonnenen Signals und in der Kontrastverbesserung.

Vorteilhaft ist es, wenn die Streuscheibe für den Durchlicht-Betrieb als Opalglas, Trübglas oder Milchglas ausgebildet ist, die jeweils einfallendes Licht streuend transmittieren. Die genannten Gläser können so ausgestaltet sein, dass sich unterschiedliches Streuverhalten einstellt, d.h. dass einfallendes direktes Licht in unterschiedliche räumliche Öffnungswinkel gestreut wird, so dass zwischen schmal streuendem und breit streuendem Verhalten unterschieden werden kann.

Bei einem anderen Ausführungsbeispiel sind der Streuscheibe Optikelemente, vorzugsweise Linsen, zugeordnet. Diese Optikelemente dienen der Strahlformung im Durchlicht-Strahlengang und ermöglichen eine optimale Anpassung an die Größe der Detektionsfläche des Durchlicht-Detektors.

Vorteilhaft ist es auch, wenn mehrere Streuscheiben mit unterschiedlichem Streuverhalten vorgesehen sind, wobei je nach Anwendungsfall eine Streuscheibe oder mehrere Streuscheiben in Kombination in den Durchlicht-Strahlengang einfügbar und entfernbar sind. Auf diese Weise kann eine Anpassung an den Anwendungsfall abhängig von der verwendeten Probe, dem Abbildungsmaßstab, dem Wellenlängenbereich des Scan-Lichtes etc. erfolgen.

Ein weiteres Ausführungsbeispiel ist dadurch gekennzeichnet, dass im Durchlicht-Strahlengang ein Spiegel verschwenkbar angeordnet ist, der das von der Probe transmittierte Licht dem Durchlicht-Detektor zuleitet. Auf diese Weise kann Licht, insbesondere aus dem Randbereich des beleuchteten Abschnitts auf der Probe, dem Durchlicht-Detektor zugeführt werden und dessen Nutzsignal verbessert werden. Auch bei einer Schrägbeleuchtung kann mit Hilfe des verschwenkbaren Spiegels das Signal des Durchlicht-Detektors verbessert werden, was zu einem Kontrastgewinn führt.

Vorteilhaft ist die Vorrichtung als konfokales Scan-Makroskop ausgeführt, bei dem der Abbildungsmaßstab schrittweise oder kontinuierlich änderbar ist. Ein solches konfokales Scan-Makroskop kann einen relativ großen Arbeitsabstand haben und es ist geeignet, relativ große Proben zu untersuchen. Möglich ist der Einsatz der Vorrichtung auch als Scan-Mikroskop.

Die Vorrichtung kann nur für den Durchlicht-Betrieb ausgelegt sein. Jedoch ist es vorteilhaft, wenn die Vorrichtung als Fluoreszenz-Makroskop ausgebildet ist und zusätzlich im rückwärtigen Strahlengang ein Fluoreszenz-Detektor angeordnet ist. Mit Hilfe einer Auswerteeinheit können sodann aus den Signalen des Durchlicht-Detektors und/oder den Signalen des Fluoreszenz-Detektors Bilder erzeugt werden. Eine Überlagerung des Fluoreszenz-Bildes und des Durchlicht-Bildes ergibt dann in Kombination mit unterschiedlichen Abbildungsmaßstäben ein detailreiches Bild der Probe. Vorteilhaft ist es, wenn Fluoreszenz-Anteile im überlagerten Bild durch eine spezifische Farbe hervorgehoben werden.

Ein Ausführungsbeispiel der Erfindung wird anhand der Figur 1 der Zeichnung erläutert. Diese zeigt ein konfokales Scan-Makroskop zum optischen Abtasten einer Probe im kombinierten Auflicht-Betrieb und im Durchlicht-Betrieb.

In Figur 1 ist ein konfokales Laser-Scan-Makroskop 10 dargestellt, das eine Scan-Vorrichtung 12 umfasst, der Licht eines Lasers 14 als Abtastlicht zugeführt ist. Die Scan-Vorrichtung 12 umfasst einen Punktscanner oder einen Zeilenscanner, wodurch ein fokussierter Lichtstrahl eine Probe P in einem Raster punktförmig oder zeilenförmig beleuchtet wird. Bei einem Zeilenscanner wird eine gesamte Bildzeile auf einmal beleuchtet, so dass eine höhere Abtastgeschwindigkeit erreicht werden kann. Der Laserstrahl wird der Probe P über eine Zoom-Optik 16, dem ein Objektiv 18 nachgeschaltet ist, zugeführt. Im Auflicht-Betrieb wird das von der Probe P zurückkommende Licht über das Objektiv 18, der Zoom-Optik 16, der Scan-Vorrichtung 12 einem Auflicht-Detektor, im vorliegenden speziellen Fall einem Fluoreszenz-Detektor 20, zugeführt, aus dessen elektrischen Signal eine Auswerteeinheit 22 Auflicht-Bilder der Probe P erzeugt. Über ein Okular 24 kann die Probe P im Auflicht-Betrieb betrachtet werden.

Die beschrieben Elemente 12 bis 24 sind im Stand der Technik bekannt. Hierzu wird auf die DE 10 2007 048 089 A1 verwiesen, die hiermit durch Bezugnahme in den Offenbarungsgehalt der vorliegenden Anmeldung einbezogen wird.

Die Zoom-Optik 16 und das Objektiv 18 bilden ein Makro-Objektiv, mit dessen Hilfe eine Probenuntersuchung auch bei makroskopischen Objekten mit hoher Auflösung in Verbindung mit der Scan-Vorrichtung 12 möglich ist. Die Scan-Vorrichtung 12 arbeitet konfokal, d.h. das Scan-Licht wird in einer Fokalebene in z-Richtung in der Probe P fokussiert. Licht aus diesem Fokus wird durch das Makro-Objektiv 16, 18 über eine Lochblende (nicht dargestellt) vor dem Detektor 20 auf diesen abgebildet. Optische Informationen, die nicht aus dieser Fokalebene kommen, werden unterdrückt. In x- und y-Richtung erfolgt die rastende Abtastung. Durch Variierung der effektiven Brennweite kann die Fokusebene in z-Richtung verändert werden, wodurch Bilder aus anderen Ebenen gewonnen werden können. Durch Variierung des Abbildungsmaßstabs des Makro-Objektivs 16, 18 können unterschiedliche Ausschnitte der Probe P in x-,y-Richtung ausgewählt werden.

Beim dargestellten Ausführungsbeispiel ist insbesondere auch ein Durchlicht-Betrieb vorgesehen. Das von der Probe P transmittierte Licht wird in einem Durchlicht-Strahlengang über eine Streuscheibe 26, einer dieser Streuscheibe 26 zugeordneten Linse 28, einem schwenkbaren Spiegel 30, einem Farbfilter 32, einem Neutralfilter 34 und einer Linse 36 einem Durchlicht-Detektor 38 zugeführt, dessen elektrisches Signal 40 der Auswerteeinheit 22 zugeführt ist. Die Streuscheibe 26, die als Opalglas, Trübglas oder Milchglas ausgebildet sein kann, streut das auf sie einfallende Licht in einen vergrößerten Raumwinkel. Das diffuse Licht wird von der nachgeschalteten Linse 28 zu einem Strahlenbündel geformt. Die Strahlformung erfolgt in Anpassung an die fotoempfindliche Fläche des Durchlicht-Detektors 38. Das Farbfilter 32 dient der Wellenlängenselektion und der Streulichtunterdrückung. Mit Hilfe des Neutralfilters 34 erfolgt eine Intensitätsanpassung. Die nachgeschaltete Linse 36 optimiert die Strahlgeometrie für die Lichtzuführung zum Durchlicht-Detektor 38.

Die Komponenten 26, 28, 32, 34, 36 können so ausgebildet sein, dass sie je nach Anwendungsfall in den Durchlicht-Strahlengang einfügbar oder wieder herausnehmbar sind. Vorteilhaft ist es, wenn verschiedene Streuscheiben 26 vorgesehen sind, die ein unterschiedliches Streuverhalten haben und je nach Anwendungsfall in den Durchlicht-Strahlengang einfügbar und wieder herausnehmbar sind.

In den Durchlicht-Strahlengang ist der verschwenkbare Spiegel 30 geschaltet, der um eine Schwenkachse 40 in Richtung des Pfeils P1 verschwenkbar ist. Weiterhin kann der Spiegel 30 in Richtung des Pfeils P2 quer zur Mittelachse des Durchlicht-Strahlenganges verschiebbar sein. Aufgrund der Verschwenkbarkeit und der Verschiebbarkeit des Spiegels 30 ist es möglich, Streulicht vom Rand des auf der Probe P rastend beleuchteten Abschnitts dem Durchlicht-Detektor 38 zuzuführen. Die Verschwenkbarkeit kann auch um mehr als eine Achse erfolgen. Der Spiegel 30 kann plan, konvex oder konkav ausgebildet sein. Durch die Wölbung kann eine weitere Strahlformung des gestreuten Durchlicht-Strahls erfolgen.

Der Spiegel 30 und weitere Elemente sind zu einem Modul 42 zusammengefasst. Verschiedene Module können unterschiedliche Komponenten oder Kombinationen von Komponenten enthalten und je nach Anwendungsfall in den Durchlicht-Strahlengang eingefügt oder entfernt werden. Ebenso ist es möglich, in dieses Modul 42 auch die Streuscheibe 26 und/oder die Linse 28 einzubeziehen.

Die Auswerteeinheit 22 wertet die Signale des Durchlicht-Detektors 40 in Abhängigkeit vom rastenden Abtasten der Scan-Vorrichtung aus. Auf diese Weise können Durchlicht-Bilder der Probe P erzeugt werden. Vorteilhaft ist es auch, wenn zusätzlich Auflicht-Bilder des Auflicht-Detektors, beispielsweise des Fluoreszenz-Detektors 20, erzeugt werden und diese Bilder einander überlagert werden. Auf diese Weise erhält man ein Gesamtbild aus der Überlagerung des Auflicht-Bildes und des Durchlicht-Bildes, was weitere Details über die Probe P zeigt. Wenn das Auflicht-Bild ein Fluoreszenz-Bild ist, so ist es vorteilhaft, die Fluoreszenz-Anteile mit einer spezifischen Farbe einzufärben.

Beim Ausführungsbeispiel nach Figur 1 wurde nur ein Laser 14 und ein Auflicht-Detektor sowie ein Durchlicht-Detektor verwendet. Selbstverständlich können auch mehrere Laser mit unterschiedlichen Wellenlängen und mehrere Auflicht-Detektoren und/oder Durchlicht-Detektoren vorgesehen sein.

Bei der vorliegenden Erfindung wird eine Zoom-Optik und ein Durchlicht-Detektor kombiniert, wobei dem Durchlicht-Detektor gestreutes Licht zugeführt wird. Mit Hilfe der Zoom-Optik ist es möglich, unterschiedlich große Ausschnitte der Probe P ohne Objektivwechsel variabel durchzuführen. Infolge der verwendeten Streuscheibe und der diffusen Ausleuchtung der fotoempfindliche Fläche des Durchlicht-Detektors wird eine Homogenisierung der durchgelassenen Strahlung erreicht, wodurch im Durchlicht-Betrieb eine Bildverbesserung erzielt wird. Damit steht dem Anwender eine universelle Auflicht-Vorrichtung, vorzugsweise für die Fluoreszenz-Untersuchung, und eine Durchlicht-Vorrichtung zur Erzeugung hochauflösender Bilder einer Probe zur Verfügung, wobei ohne Objektivwechsel und ohne Refokussierung unterschiedlich große Abschnitte der Probe betrachtet werden können. Mit Hilfe der Überlagerung von Auflicht-Bildern und Durchlicht-Bildern können von der Probe Umrisse, innere Details und spezifische Auflicht-Details und Durchlicht-Details ermittelt werden.

Die Erfindung betrifft ferner ein Arbeitsverfahren zum optischen Abtasten von Proben, bei der die Probe in einem Raster punktförmig oder zeilenförmig mit Hilfe einer Scan-Vorrichtung beleuchtet wird. Durch eine Zoom-Optik, die zwischen der Scan-Vorrichtung und einem Objektiv angeordnet ist, wird die Größe des beleuchteten Abschnitts auf der Probe einstellbar festgelegt. Von der Probe transmittiertes Licht wird einem Durchlicht-Detektor zugeführt. Im Durchlicht-Strahlengang wird ein Streumittel vor dem Durchlicht-Detektor angeordnet, wodurch das von der Probe transmittierte Licht gestreut wird.

Vorteilhaft können mehrere Streuscheiben mit unterschiedlichem Streuverhalten bereitgehalten werden. Je nach Anwendungsfall wird dann eine Streuscheibe oder mehrere Streuscheiben in Kombination in den Durchlicht-Strahlengang eingefügt oder wieder entfernt.

Vorteilhaft ist es, wenn das Arbeitsverfahren zur Fluoreszenz-Makroskopie verwendet wird und ein Fluoreszenz-Detektor im rückwärtigen Strahlengang Fluoreszenz-Licht von der Probe detektiert.

Weiterhin ist es vorteilhaft, wenn aus den Signalen des Fluoreszenz-Detektors und/oder den Signalen des Durchlicht-Detektors Bilder der Probe erzeugt werden. Ein Gesamtbild kann dadurch erzeugt werden, dass das Fluoreszenz-Bild und das Durchlicht-Bild einander überlagert werden.

### Bezugszeichenliste:

- 10: Laser-Scan-Makroskop
- 12: Scan-Vorrichtung
- 14: Laser
- P: Probe
- 16: Zoom-Optik
- 18: Objektiv
- 20: Fluoreszenz-Detektor
- 22: Auswerteeinheit
- 24: Okular
- 26: Streuscheibe
- 28: Linse
- 30: Spiegel
- 32: Farbfilter
- 34: Neutralfilter
- 36: Linse
- 38: Durchlicht-Detektor
- 40: Schwenkachse
- P1, P2: Richtungspfeile
- 42: Modul

## Patentansprüche

1. Scan-Mikroskop oder Scan-Makvoskop zum optischen Abtasten und Untersuchen von Proben, mit einer Scan-Vorrichtung (12), die die Probe in einem Raster punktförmig oder zeilenförmig beleuchtet,
einer Zoom-Optik (16), die zwischen der Scan-Vorrichtung (12) und einem Objektiv angeordnet ist und die Größe des beleuchteten Abschnitts auf der Probe (P) einstellbar festlegt,
und mit einem Durchlicht-Detektor (38), dem von der Probe (P) transmittiertes Licht zur Aufnahme eines Bildes der Probe zugerührt ist,
**dadurch gekennzeichnet, dass** im Durchlicht-Strahlengang vor dem Durchlicht-Detektor (38) eine Streuscheibe (26) angeordnet ist, die das von der Probe (P) transmittierte Licht streut, um eine lokale Übersteuerung des Durchlicht-Detektors (38) zu vermeiden.

2. Scan-Mikroskop oder Scan-Makvoskop nach Anspruch 1, **dadurch gekennzeichnet, dass** die Streuscheibe (26) für den Durchlicht-Betrieb als Opalglas, Trübglas oder Milchglas ausgebildet ist, die jeweils einfallendes Licht streuend transmittieren.

3. Scan-Mikroskop oder Scan-Makvoskop nach einem der vorhergehenden Ansprüche, **dadurch gekennzeichnet, dass** es als konfokales Sean Makrsokop oder als konfokales Scan-Mikroskop (10) ausgebildet ist.

4. Scan-Mikroskop oder Scan-Makvoskop nach einem der vorhergehenden Ansprüche, **dadurch gekennzeichnet, dass** im Durchlicht-Strahlengang optische Elemente (32, 34) zur Wellenlängenselektion und/oder Änderung der Lichtintensität vorhanden sind.

5. Scan-Mikroskop oder Scan-Makvoskop nach einem der vorhergehenden Ansprüche, **dadurch gekennzeichnet, dass** mehrere Streuscheiben und Optikelemente vorhanden sind, die einzeln oder in Kombination in den Durchlicht-Strahlengang einfügbar oder entfernbar sind.

6. Scan-Mikroskop oder Scan-Makvoskop nach einem der vorhergehenden Ansprüche, **dadurch gekennzeichnet, dass** mehrere Streuscheiben mit unterschiedlichem Streuverhalten vorhanden sind, und dass je nach Anwendungsfall eine Streuscheibe oder mehrere Streuscheiben in Kombination in den Durchlicht-Strahlengang einfügbar und entfernbar sind.

7. Scan-Mikroskop oder Scan-Makvoskop nach einem der vorhergehenden Ansprüche, **dadurch gekennzeichnet dass** im Durchlicht-Strahlengang ein Spiegel (30) verschwenkbar angeordnet ist, der das von der Probe (P) transmittierte Licht dem Durchlicht-Detektor (38) zuleitet.

8. Scan-Mikroskop oder Scan-Makvoskop nach Anspruch 7, **dadurch gekennzeichnet, dass** der Spiegel (30) plan, konvex oder konkav ausgebildet ist.

9. Scan-Mikroskop oder Scan-Makvoskop nach einem der Ansprüche 7 oder 8, **dadurch gekennzeichnet, dass** die Schwenkachse (40), um die der Spiegel schwenkbar ist, in einer Richtung (P2) quer zur Mittelachse des Durchlichtstrahlengangs verschiebbar ist.

10. Scan-Mikroskop oder Scan-Makvoskop nach einem der vorhergehenden Ansprüche, **dadurch gekennzeichnet, dass** es als Fluoreszenz-Mikroskop oder als Fluoreszenz Makroskop ausgebildet ist und im rückwärtigen Strahlengang ein Fluoreszenz-Detektor (20) zum Erzeugen von Auflichtbildern angeordnet ist.

11. Scan-Mikroskop oder Scan-Makvoskop nach einem der vorhergehenden Ansprüche, **dadurch gekennzeichnet, dass** eine Auswerteeinheit (22) vorhanden ist, die aus den Signalen des Fluoreszenz-Detektors (20) und/oder den Signalen des Durchlicht-Detektors (38) Bilder der Probe erzeugt.

12. Scan-Mikroskop oder Scan-Makvoskop nach Anspruch 11, **dadurch gekennzeichnet, dass** die Auswerteeinheit (22) derart ausgebildet ist, dass das Fluoreszenz-Bild und das Durchlicht-Bild einander überlagerbar sind.

13. Scan-Mikroskop oder Scan-Makvoskop nach Anspruch 12, **dadurch gekennzeichnet, dass** im überlagerten Bild Fluoreszenz-Anteile durch eine spezifische Farbe hervorgehoben sind.

## Claims

1. Scanning microscope or scanning macroscope for optical scanning and examining of samples,
comprising a scanning device (12) for illuminating the sample in a pattern in form of points or lines,
an optical zoom lens (16) that is arranged between the scanning device (12) and an objective and adjustably determines the size of the illuminated section on the sample (P),
and comprising a transmitted light detector (38) to which light transmitted by the sample for taking a picture of the sample is supplied,
**characterized in that** in the transmitted light beam path a diffusing disk (26) is arranged in front of the transmitted light detector (38) for diffusing the light transmitted by the sample (P) in order to prevent a local overload of the transmitted light detector.

2. Scanning microscope or scanning macroscope according to claim 1, **characterized in that** the diffusing disk (26) for the transmitted light operation is formed as opal glass, turbidity glass or translucent glass each of which diffusely transmit the incident light.

3. Scanning microscope or scanning macroscope according to one of the preceding claims, **characterized in that** it is formed as confocal scanning macroscope or as confocal scanning microscope (10).

4. Scanning microscope or scanning macroscope according to one of the preceding claims, **characterized in that** in the transmitted light beam path optical elements (32, 34) for selecting the wavelength and/or changing the light intensity are provided.

5. Scanning microscope or scanning macroscope according to one of the preceding claims, **characterized in that** several diffusing disks and optical elements are provided that, individually or in combination, can be inserted into or removed from the transmitted light beam path.

6. Scanning microscope or scanning macroscope according to one of the preceding claims, **characterized in that** several lenses with a different scattering behaviour are provided, and **in that** according to the respective application one diffusion disk or a combination of several diffusion disks can be inserted into or removed from the transmitted light beam path.

7. Scanning microscope or scanning macroscope according to one of the preceding claims, **characterized in that** in the transmitted light beam path a mirror (30) is arranged rotatably that guides the light transmitted by the sample (P) to the transmitted light (3 8) detector.

8. Scanning microscope or scanning macroscope according to claim 7, **characterized in that** the mirror (30) is formed planar, convex or concave.

9. Scanning microscope or scanning macroscope according to claims 7 or 8, **characterized in that** the swivel axis (40) about which the mirror can be swivelled can be moved in a direction (P2) transverse to the middle axis of the transmitted light beam path.

10. Scanning microscope or scanning macroscope according to one of the preceding claims, **characterized in that** it is formed as fluorescence microscope and that in the rearward beam path a fluorescence detector (20) for producing incident light pictures is arranged.

11. Scanning microscope or scanning macroscope according to one of the preceding claims, **characterized in that** an evaluation unit (22) is provided that produces from the signals of the fluorescence detector (20) and/or the signals of the incident light detector (38) pictures of the sample.

12. Scanning microscope or scanning macroscope according to claim 11, **characterized in that** the evaluation unit (22) is formed such that the fluorescence image and the transmitted light image can superimpose each other.

13. Scanning microscope or scanning macroscope according to claim 12, **characterized in that** in the superimposed picture fluorescence parts are highlighted by means of a specific colour.

## Revendications

1. Microscope à balayage ou macroscope à balayage pour l'analyse et l'examen optiques d'échantillons, lequel comporte un dispositif à balayage (12) qui éclaire l'échantillon par point ou par ligne suivant une trame,
une optique à focale variable (16) qui est disposée entre le dispositif à balayage (12) et un objectif et qui définit de façon réglable la taille de la portion éclairée sur l'échantillon (P),
et un détecteur de lumière transmise (38) auquel est amené de la lumière transmise par l'échantillon (P) pour recevoir une image de l'échantillon,
**caractérisé en ce que** dans le trajet des rayons de la lumière transmise, en amont du détecteur de lumière transmise (38), est disposé un diffuseur (26) qui diffuse la lumière transmise par l'échantillon (P) pour empêcher une saturation locale du détecteur de lumière transmise (38).

2. Microscope à balayage ou macroscope à balayage selon la revendication 1, **caractérisé en ce que** le diffuseur (26) est réalisé en opaline, en verre opaque ou en verre dépoli qui transmet de façon diffuse la lumière incidente pour exploiter la lumière transmise.

3. Microscope à balayage ou macroscope à balayage selon l'une des revendications précédentes, **caractérisé en ce qu'**il est conformé en microscope ou macroscope à balayage à foyer commun (10).

4. Microscope à balayage ou macroscope à balayage selon l'une des revendications précédentes, **caractérisé en ce qu'**il est prévu dans le trajet des rayons de la lumière transmise des éléments optiques (32, 34) pour sélectionner la longueur d'onde et/ou pour modifier l'intensité lumineuse.

5. Microscope à balayage ou macroscope à balayage selon l'une des revendications précédentes, **caractérisé en ce que** plusieurs diffuseurs et éléments optiques sont prévus qui peuvent être insérés individuellement ou en combinaison dans le trajet des rayons de la lumière transmise, ou en être retirés.

6. Microscope à balayage ou macroscope à balayage selon l'une des revendications précédentes, **caractérisé en ce qu'**il est prévu plusieurs diffuseurs présentant des comportements de diffusion différents, et **en ce qu'**un diffuseur ou plusieurs diffuseurs peuvent être insérés en combinaison dans le trajet des rayons de la lumière transmise, et en être retirés, en fonction du cas d'application.

7. Microscope à balayage ou macroscope à balayage selon l'une des revendications précédentes, **caractérisé en ce qu'**un miroir (30) est disposé dans le trajet des rayons de la lumière transmise de façon à pouvoir pivoter, lequel miroir amène de la lumière transmise par l'échantillon (P) au détecteur de lumière transmise (38).

8. Microscope à balayage ou macroscope à balayage selon la revendication 7, **caractérisé en ce que** le miroir (30) a une conformation plane, convexe ou concave.

9. Microscope à balayage ou macroscope à balayage selon l'une des revendications 7 ou 8, **caractérisé en ce que** l'axe de pivotement (40), autour duquel le miroir peut pivoter, est déplaçable dans une direction (P2) transversale à l'axe médian du trajet des rayons de la lumière transmise.

10. Microscope à balayage ou macroscope à balayage selon l'une des revendications précédentes, **caractérisé en ce qu'**il est conformé en microscope ou macroscope à fluorescence et **en ce qu'**un détecteur de fluorescence (20) est disposé dans le trajet inverse des rayons pour générer des images de réflexion.

11. Microscope à balayage ou macroscope à balayage selon l'une des revendications précédentes, **caractérisé en ce qu'**une unité d'exploitation (22) est prévue qui génère des images de l'échantillon à partir des signaux du détecteur de fluorescence (20) et/ou des signaux du détecteur de lumière transmise (38).

12. Microscope à balayage ou macroscope à balayage selon la revendication 11, **caractérisé en ce que** l'unité d'exploitation (22) est conformée de telle sorte que l'image de fluorescence et l'image de lumière transmise sont superposables.

13. Microscope à balayage ou macroscope à balayage selon la revendication 12, **caractérisé en ce que** dans l'image superposée des parties de fluorescence sont mises en évidence par une couleur spécifique.
